# DEMANDE DE BREVET EUROPEEN

(11) **EP 2 666 575 A1**
(43) Date de publication de la demande: **27.11.2013**
(21) Numéro de dépôt: 13163544.3
(22) Date de dépôt: 12.04.2013
(51) Int. Cl.: B23K 9/23, B23K 35/02

(54) **Fil fourré pour soudage des aciers à hautes limites élastiques**

(30) Priorité: 21.05.2012 FR 1254581
(71) Demandeur: AIR LIQUIDE WELDING FRANCE, 75007 Paris (FR); L'AIR LIQUIDE, SOCIETE ANONYME POUR L'ETUDE ET L'EXPLOITATION DES PROCEDES GEORGES CLAUDE, 75007 Paris (FR)
(72) Inventeur: Ehrhart, Gilles, 95310 Saint Ouen L'Aumone (FR)
(74) Mandataire: Pittis, Olivier

(57) **Abrégé**

L'invention porte sur un fil fourré conçu pour le soudage des aciers à haute limite élastique ou aciers HLE et un procédé de soudage des aciers HLE le mettant en oeuvre. Le fil fourré de soudage à l'arc comprend une enveloppe externe en acier contenant des éléments de remplissage qui comprennent, par rapport à la masse totale du fil fourré, de 1.5 à 7 % en masse de TiO₂, de plus de 1% à 7 % en masse de ZrO₂, et au moins 75% en masse de fer.

## Description

L'invention porte sur un fil fourré conçu pour le soudage des aciers à haute limite élastique ou aciers HLE et un procédé de soudage des aciers HLE le mettant en oeuvre.

Les aciers à haute limite élastique (HLE), c'est-à-dire ayant une limite élastique supérieure ou égale à 460 MPa, sont de plus en plus utilisés car ils permettant une réduction des épaisseurs des structures métalliques utilisées en construction.

On peut citer par exemple les structures métalliques des plateformes en mer et plus particulièrement leur pieds constitués d'acier dont la limite élastique est typiquement supérieure à 690 MPa, ou encore les conduites forcés de barrage hydro-électrique et les bras des engins de levage.

Ceci permet de limiter l'épaisseur de l'acier utilisé et de réduire considérablement le poids de la structure finale.

Selon la structure à souder considérée, une solution de soudage adaptée doit être appliquée.

Toutefois, on se heurte souvent à des problèmes de fissuration à froid et de propriétés mécaniques en zone fondue.

Actuellement, il existe des consommables de soudage des aciers HLE de types fils fourrés à base de rutile, basique et à âme métallique (ou *metal cored* en anglais).

Ces trois types de fils présentent des avantages et des inconvénients.

Ainsi, les fils fourrés rutile sont très appréciés pour leurs qualités opératoires, à savoir très bon détachement de laitier, soudage toutes positions et haute productivité, en particulier une vitesse de fil de 7 à 10m/min en position verticale montante, ce qui correspond à un taux de dépôt de 3 à 4 kg/h, cordon plat, avec très peu de reprise en meulage.

Malheureusement, les fils fourrés rutile sont limités techniquement lorsque l'acier soudé est allié, notamment allié avec des éléments Cr, Ni, Mo, V et/ou Nb, et encore plus si un traitement de détentionnement est prévu sur l'assemblage final.

L'utilisation de tels fils avec un laitier rutile donne un important transfert de titane (Ti) provenant du consommable vers le métal fondu, lequel titane se combine avec l'un ou plusieurs des éléments d'alliage précités issus du métal de base, ce qui induit un important effet de durcissement de l'acier et se traduit par une augmentation des propriétés de traction et une baisse inexorable des résiliences.

En effet, les fils fourrés rutile comportent habituellement environ 50% en masse de TiO₂ dans le flux et ce titane est transféré en zone fondue pendant l'opération de soudage.

Par ailleurs, du titane additionnel peut provenir des ferro-alliages (FeSiTi) utilisés en tant qu'éléments constitutifs de la matière ou sous forme d'impuretés, et également se retrouver dans le joint soudé.

Ces diverses sources de titane engendrent une teneur totale en titane (Ti) généralement comprise entre 300 et 650 ppm en masse par rapport à la masse du joint soudé.

Or, dans le cas des aciers HLE, les valeurs de titane favorables pour obtenir de bonnes résiliences et niveau de traction suffisant, sont inférieures à 300 ppm dans le métal fondu.

Le transfert de titane est donc trop élevé et relativement irrégulier bien que cet élément soit important pour les tenues mécaniques des joints sur les assemblages d'aciers HLE.

Les paramètres électriques, la position de soudage tout comme la technologie utilisée pour produire le consommable (fils fourrés feuillards ou tubulaires) influencent le transfert du titane mais ils ne suffisent pas à rendre compte de toutes les variations observées.

Par ailleurs, les fils fourrés basiques ne transfèrent, quant à eux, que très peu de titane dans le métal fondu. Ils ne sont donc pas sujets à de telles dégradations des propriétés mécaniques.

En outre, ils présentent l'avantage d'avoir une valeur d'hydrogène diffusible et d'oxygène particulièrement basses, typiquement de l'ordre de moins de 2 ml de H₂/100g de métal, et de 300 à 350 ppm d'oxygène dans le métal déposé.

Malheureusement, les fils fourrés basiques restent très difficiles à souder dans toutes les positions et plus particulièrement en verticale montante, donnant ainsi des niveaux de productivité de l'ordre de 1 à 2 kg/h, soit 2 à 3 fois moindre qu'avec les fils fourrés rutile. Enfin, les fils fourrés à âme métallique ou *metal cored* présentent l'avantage de ne pas avoir de laitier, ce qui est idéal pour souder à plat sans avoir à décrasser le cordon pour en éliminer le laitier.

A cela, il faut ajouter l'absence de Ti dans le fil qui permet, tout comme pour les fils basiques précités, de fortement limiter la teneur en Ti du métal déposé.

Toutefois, les fils fourrés à âme métallique souffrent de l'absence de laitier lorsqu'il faut souder en position, limitant ainsi leur emploi en position vertical montante à de faibles rendements de l'ordre de 1 à 2 kg/h, donc là encore, des rendements 2 à 3 fois moindres qu'avec les fils fourrés de type rutile.

En résumé, les fils fourrés à base de rutile transfèrent trop de titane vers le joint de soudure, alors que les fils basiques, bien qu'ils soient capables de garder un titane très bas, c'est à dire entre 100 et 200 ppm, du fait de leur laitier qui n'est pas basé sur le rutile, conduisent à une faible productivité et, par ailleurs, leur fort besoin de compétences de la part du soudeur lors de l'opération d'assemblage les handicapent pour une utilisation intensive en chantier de construction.

De plus, de manière plus générale, les consommables de soudage disponibles actuellement, c'est-à-dire les fils de soudage existant, ne permettent pas d'obtenir, d'une part, le niveau de limite élastique requis et, d'autre part, un haut niveau de traction et de bonnes résiliences, ces deux dernières propriétés étant généralement antagonistes.

Le problème qui se pose est de proposer un consommable de soudage, à savoir un fil de soudage, permettant de résoudre tout ou partie de ces problèmes, en particulier un fil permettant d'obtenir un métal soudé présentant le niveau de limite élastique requis, un haut niveau de traction, c'est-à-dire d'au moins ou supérieur à 690 MPa à température ambiante (i.e. 20°C) et de bonnes résiliences, c'est-à-dire d'au moins ou supérieures à 69 J à -40°C et/ou d'au moins ou supérieures à 47 J à -60°C.

En d'autres termes, l'invention vise à proposer un fil conduisant de bonnes propriétés mécaniques du joint de soudage et qui soit d'emploi facile et ce, en soudage en toute position, c'est à dire un fil permettant notamment l'obtention d'un métal déposé présentant une teneur en Ti inférieure à 300 ppm, donc comparable à celles des fils basiques, tout en garantissant une productivité et des performances opératoires comparables à un fil rutile.

La solution de l'invention est un fil fourré de soudage à l'arc comprenant une enveloppe externe en acier, par exemple une enveloppe tubulaire, contenant des éléments de remplissage, caractérisé en ce que lesdits éléments de remplissage comprennent, par rapport à la masse totale du fil fourré de 1.5 à 7 % en masse de TiO₂ (rutile), de plus de 1% à 7 % en masse de ZrO₂ (zircone), et au moins 75% en masse de fer.

Le fil fourré de l'invention contient donc un mélange rutile/zircone, et non uniquement du rutile, de manière à diminuer le taux de titane (Ti) dans le métal déposé obtenu par fusion du fil et à rendre plus stable le transfert de métal du fil vers le bain de soudure après sa fusion par un arc électrique par rapport à un fil basique tout en garantissant une quantité de laitier suffisante.

En effet, cette addition de zircone au rutile de sorte de former un mélange zircone/rutile permet de diminuer la proportion de rutile dans le flux de remplissage du fil fourré et donc de faire chuter le taux de titane transférant vers le métal fondu.

Grâce à un tel mélange rutile/zircone, le fil fourré de l'invention permet d'obtenir les propriétés mécaniques attendues tout en garantissant une soudabilité et une productivité comparable à un fil rutile sans zircone, c'est-à-dire permet d'éviter les inconvénients et problèmes se posant avec les fils fourrés à base de rutile mais sans zircone, en particulier lors du soudage des aciers HLE.

En effet, l'effet durcissant du titane est connu et a été montré par les documents : K Hirabayashi et al., Improvement of toughness of submerged arc weld metal of low temperature service line pipe, Doc. XII-A-135-77, IIW et G.M. Evans, The effect of titanium in SMA C-Mn Steel multipass deposits, 72nd AWS Annual Convention, April 16-18, 1991.

Ainsi, il a été montré que le titane a une influence sur les propriétés mécaniques des soudures et particulièrement sur leur résilience. Il convient donc de limiter la présence de titane pour espérer obtenir un bon niveau de résilience.

Toutefois, la teneur en titane à utiliser dépendent de nombreux facteurs, tel que :
- la composition du métal, comme montré par le document : S. Nakano et al., Optimizing the titaium effect on weld metal toughness, Doc. XII-B-182-75 (1975), IIW;
- le taux d'azote, comme montré par le document : H Terashima et al, Effects of Ti, Al and N on toughness in 60 kg/mm2 class submerged arc weld metal, Doc. IX-1196-81, 1981, IIW; et
- la quantité d'oxygène, comme montré par le document : T. Suga et al., Toughness of weld metal by MAG welding flux-cored wire for low temperature service steel, Doc.XII-1492-97, IIW.

Selon l'invention, la teneur totale en titane a été limitée à 3.5% en masse dans le fil fourré, de préférence entre 1.10 et 3.5%, de manière à conserver les effets bénéfiques du titane et obtenir de bonnes propriétés mécaniques du joint de soudage, notamment en terme de résilience, et par ailleurs, de la zircone a été ajoutée pour permettre d'obtenir un fil d'emploi facile et adapté au soudage en toute position, en particulier lors d'une opération de soudage d'un acier HLE.

En effet, la limite élastique dans le métal soudé est directement liée à sa composition chimique, notamment sa teneur en titane, et la composition du fil utilisé pour réaliser le joint de soudage (métal soudé) doit donc être choisie avec soin pour permettre l'obtention des propriétés de traction élevées tout en conservant un niveau de résiliences au-dessus du minimum requis par l'application visée et ce, sans que cela soit au détriment de la facilité d'usage et du soudage en position.

L'analyse et la détermination de la teneur des éléments constituants le fil fourré peuvent être réalisées à l'aide des techniques d'analyse suivantes :

### ICP ou Plasma couplé induit (Induced Coupled Plasma)

- C. Trasset et J.M. Mermet, Les applications analytiques des plasma HF, Paris Technique et Documentation ; Lavoisier ; 1984.
- R.H. Wendt et al., Induction coupled plasma source spectrometric excitation, Anal. Chem. ; USA; 37, p. 920; 1965.
- R.K. Winge et al., Inductively coupled plasma atomic emission spectroscopy : an atlas of spectral information; Amsterda; 1985; Elsevier
- I.B. Brenner et al., a spectal line atlas for multitrace and minor element analysis of geological and ore mineral samples by ICP-AES, ICP Inform. Newsletter; USA; 10, p. 45; 1984.

### Fluorescence X

- E. P. Bertin, Principles and Practice of X-Ray Spectrometric Analysis, Heyden & Son Ltd, 2e Ed, Avril 1975.

L'analyse et la détermination de la teneur des éléments constituants le métal déposé peuvent être réalisées à l'aide des techniques d'analyse suivantes:

### Spectrométrie à émission optique (Optical emission spectroscopy) :

Cette technique est décrite notamment par :
- W. Grimm, Spectrochemica Acta 23B, p. 443 ;1968.
- R. Berneron, Spectrochemica Acta 33B, p. 665 ; 1978.
- R. Berneron et J.C. Charbonnier, Surf. And Interface Anal. 3, p. 134 ; 1981.

### Analyse élémentaire O/N

- Catharométrie pour l'azote avec détecteur à conductivité thermique (Thermal Conductivity Detector) tel que décrit par les documents suivants :
   G. Guiochon et al., Gas Chromatography in inorganics and organometallics, Ann Arbor Science Publishers, Ann Arbor Mich.; 1973.
   . T. S. Harrison, "Handbook of Analytical Control of Iron and Steel Production", John Wiley and Sons, New York, Chichester, Brisbane, Toronto, 1979.
- Capteur infrarouge non-dispersif (Non Dispersive Infrared Sensor) pour l'oxygène basé sur une analyse des espèces CO et CO₂ après fusion de l'échantillon, comme enseigné par :
- Norme ISO 17053:2005; Steel and iron -- Determination of oxygen -- Infrared method after fusion under inert gas;
- Norme ASTM E1019 - 08; Standard Test Methods for Determination of Carbon, Sulfur, Nitrogen, and Oxygen in Steel, Iron, Nickel, and Cobalt Alloys by Various Combustion and Fusion Techniques.

Selon le cas, le fil fourré de l'invention peut comprendre l'une ou plusieurs des caractéristiques techniques suivantes :
- il contient moins de 6,5% en masse de TiO₂, de préférence moins de 6,2% en masse de TiO₂, de préférence encore moins de 6% en masse de TiO₂.
- il contient plus de 1.6% en masse de TiO₂, de préférence plus de 1.7% en masse de TiO₂, de préférence encore plus de 1.8% en masse de TiO₂. Typiquement, il contient au moins 1.9% en masse de TiO₂.
- il contient moins de 6.5% de ZrO₂, de préférence moins de 6.3% de ZrO₂, de préférence encore moins de 6% de ZrO₂. Typiquement, il contient moins de 5.9% de ZrO₂.
- il contient plus de 1.2% de ZrO₂.
- typiquement, il contient au moins 1.5% de ZrO₂.
- il contient au moins 80% en masse de fer.
- le taux de remplissage du fil fourré est compris entre 10 et 20%, de préférence un taux de remplissage entre 14 et 17%.
- il contient de 0,01 à 0,5% de Al, de préférence de 0,03 à 0,4% de Al, de préférence encore de 0,05 à 0,2% de Al, et typiquement de 0,05 à 0,15% de Al.
- il contient de 0,0005 à 0,55% de Li, Na et/ou K, de préférence au moins 0,003% de Li, Na et/ou K.
- il contient de 0,1 à 1,5% de Si, de préférence de 0,2 à 1% de Si, de préférence encore de 0,2 à 0,8% de Si, et typiquement de 0,3 à 0.7% de Si.
- il contient de 0,01 à 0,1% de C, de préférence de 0,02 à 0,09%
- il contient de 1,5 à 3% de Mn, de préférence de 1,7 à 2,9% de Mn et typiquement de 1,8 à 2,7% de Mn.
- il contient de 0,005 à 3,2% de Ni, de préférence de 0,01 à 3% de Ni.
- il contient de 0,0001 à 0.015% de B, de préférence de 0,0001 à 0.012% de B.
- il contient de 0,001 à 0.5% de Mo, de préférence de 0,001 à 0.4% de Mo.
- il contient de 0,01 à 0.25% de Cr, de préférence de 0,01 à 0.20% de Cr.
- il contient de 0,10 à 0.80% de Mg, de préférence de 0,20 à 0.70% de Mg.
- il comprend une enveloppe externe en acier contenant du fer, moins de 0,15% de C, moins de 0,7% de Si, moins de 1,8% de Mn, moins de 0,001% de Mo, moins de 1,5% de Ni, moins de 0,15% de Cr et/ou moins de 0,003% de B (% en masse du fil).
- il comprend une enveloppe externe en acier contenant du fer, de 0,01 à 0,10% de C, de 0,001 à 0,50% de Si, de 0,001 à 1.5% de Mn, moins de 0,001% de Mo, de 0,001 à 1% de Ni, de 0,001 à 0,10% de Cr et/ou moins de 0,003% de B (% en masse du fil).

En effet, d'une façon générale, le flux d'un fil fourré selon l'invention doit préférentiellement contenir une proportion de 1.5% à 4% de Mg et/ou de Al/Mg pour maintenir un niveau d'oxygène et d'hydrogène diffusible bas.

De manière analogue, de l'aluminium peut être introduit à l'aide de Al-Mg, d'alumine, mais plus particulièrement de feldspath alcalin, c'est-à-dire de feldspath de Li, Na et/ou K.

L'aluminium est un élément sensible à l'oxydation qui permet de réduire le niveau d'oxygène dans le métal déposé et lorsqu'il forme un oxyde, il vient contribuer à la formation du laitier.

Par ailleurs, les éléments alcalins, tel que Li, Na et/ou K, peuvent aussi être introduits à l'aide de matières carbonatées, de fluorures, de cryolite, de chlorures, d'oxydes, mais on préfère plus particulièrement les introduire sous forme de silicate et/ou de feldspath. Ceux-ci permettent d'obtenir une stabilisation de l'arc et un aide à la fusion du flux.

Le silicium peut être amené par du ferro-silicio-manganèse, du ferro-silico-zirconium, de la silice, du siliciure de calcium, du sable de zircon, et plus particulièrement par du ferro-silicum. Le silicium permet de garantir un bon mouillage du cordon et d'améliorer les propriétés mécaniques du métal déposé.

Par ailleurs, de façon générale, le titane peut être introduit sous la forme de ferro-titane, des oxydes mixtes de fer et titane, et plus particulièrement d'oxyde de titane naturel ou synthétique, alors que le zirconium peut être introduit sous la forme de ferro-silico-zirconium, de sable de zircon et plus particulièrement de zircone. Il est donc primordial de veiller aussi à la teneur globale en titane (Ti) du fil fourré.

Le carbone peut être introduit à l'aide de ferro-manganèse carburé, et plus particulièrement de graphite, et le molybdène peut être introduit à l'aide de molybdène pur, et plus particulièrement de ferro-molybdène. Ceux-ci permettent d'améliorer les propriétés mécaniques du métal déposé.

Le nickel peut être introduit à l'aide de nickel pur et le bore à l'aide de ferro-bore. Ceux-ci permettent également d'améliorer les propriétés mécaniques du métal déposé.

Enfin, le manganèse peut être introduit à l'aide de ferro-manganèse carburé, de ferro-manganèse, et plus particulièrement de manganèse pur, de manière à, là encore, améliorer les propriétés mécaniques du métal déposé.

L'invention porte en outre sur un procédé de soudage à l'arc d'une ou plusieurs pièces en acier présente une haute limite élastique (HLE) supérieure ou égale à 460 MPa, dans lequel on met en oeuvre un fil fourré selon l'invention.

De préférence, les pièces à souder sont en un acier type HLE présentant une limite élastique supérieure ou égale à 520 MPa, typiquement d'au moins 690 MPa.

Lors du soudage, on met en oeuvre un gaz de protection choisi parmi les mélanges d'argon et de CO₂ et/ou O₂.

Grâce au procédé de soudage de l'invention, les pièces sont réunies entre elles par un joint de soudage présentant un niveau de traction d'au moins 490 MPa, typiquement d'au moins 690 MPa, à température ambiante (i.e. 20°C) et des résiliences d'au moins 69 J à -40°C et/ou d'au moins 47 J à -60°C. De plus, le métal déposé constituant ce joint de soudure obtenu par fusion du fil fourré et dilution avec du métal de base provenant des pièces, présente une teneur en Ti inférieure à 300 ppm.

La présente invention va maintenant être mieux comprise grâce aux exemples ci-après et explications suivantes données en références aux Figures annexées parmi lesquelles :
- la Figure 1 représente une vue schématique d'un mode de réalisation d'une installation de soudage à l'arc avec fil fusible sous flux gazeux utilisable pour mettre en oeuvre le procédé de soudage selon l'invention,
- la Figure 2 représente une vue schématique, avec arrachement, d'une opération de soudage de tôles réalisé avec l'installation de la Figure 1,
- la Figure 3 représente une vue schématique d'un dépôt hors dilution réalisé pour caractériser les propriétés mécaniques du métal déposé, comprenant une succession de couches formées chacune de trois passes de soudage.
- la Figure 4 représente le positionnement du prélèvement à mi-hauteur d'une éprouvette de résilience dont l'entaille se situe en zone dite recuite d'un dépôt hors dilution réalisé pour caractériser les propriétés mécaniques du métal déposé.
- la Figure 5 représente le positionnement du prélèvement à mi-hauteur d'une éprouvette de résilience dont l'entaille se situe en zone dite brute d'un dépôt hors dilution réalisé pour caractériser les propriétés mécaniques du métal déposé.
- la Figure 6 représente le positionnement du prélèvement à mi-hauteur d'une éprouvette de traction cylindrique prélevée dans l'axe longitudinal du dépôt d'un dépôt hors dilution réalisé pour caractériser les propriétés mécaniques du métal déposé.

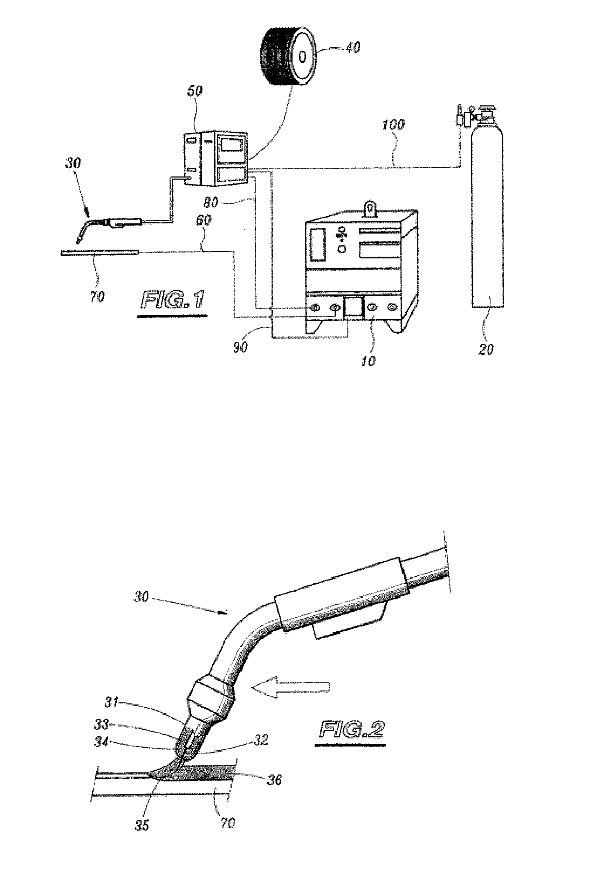

Les Exemples ci-dessous ont été réalisés au moyen d'une installation de soudage à l'arc telle que représentée en Figure 1, laquelle comprend un générateur de courant électrique 10, une source de gaz de soudage 20, une torche de soudage 30, une bobine d'alimentation en fil fusible 40 selon l'invention, et une unité d'entrainement du fil fusible 50, ou dévidoir.

Le générateur 10 est relié par une premier câble 60 aux tôles à souder 70, et par un deuxième câble 80 à l'unité d'entraînement du fil fusible 50 afin d'imposer le signal électrique souhaité entre le fil fusible et les tôles à souder.

Une conduite ou canalisation de gaz 100 permet d'alimenter la torche en gaz via l'unité d'entraînement 50. La source de gaz 20 peut être une bouteille de gaz, par exemple un mélange gazeux formé d'argon additionné de 18% de CO₂ (% en volume) répondant au standard M21 de la norme NF EN 439 commercialisé par Air Liquide sous la référence ATAL 5A™.

Un câble de contrôle 90 relie par ailleurs le générateur 10 à l'unité d'entrainement 50 du fil fusible, afin d'adapter l'intensité du courant à la vitesse d'avance du fil.

A titre d'exemple, le générateur de courant électrique 10 est un poste de soudage Digiwave 500, la torche de soudage 30 est une torche de type Promig 441 W, et le dévidoir 50 est un dévidoire de type Digiwave DV 500 CDR qui sont commercialisés par Air Liquide Welding.

La Figure 2 représente l'opération de soudage de pièces en acier HLE au moyen de la torche 30 et de l'installation de la Figure 1.

On distingue, dans la buse d'extrémité 31 de la torche, la partie terminale du fil fusible 32 selon l'invention, un tube de contact 33 qui guide ce fil et lui amène le courant électrique, une colonne de gaz 34 jaillissant de la torche vers les tôles à souder 70, et le bain de soudure 35 qui provient de la fusion des tôles et de l'électrode fusible et qui forme, après refroidissement, un cordon de soudure 36.

De façon générale, la présente invention porte sur l'utilisation d'un fil fourré selon l'invention pour opérer un soudage à l'arc, en courant lisse ou pulsé, sous flux gazeux, le fil fourré étant fondu par l'arc électrique de manière à opérer un soudage de pièces en acier HLE.

Lors de la mise en oeuvre du procédé de soudage de l'invention, par exemple avec l'installation de la Figure 1, on fait donc jaillir un arc électrique entre les tôles en acier HLE à souder et le fil de soudage fusible 32 selon l'invention, ledit fil fusible 32 étant animé d'un mouvement de déplacement en translation et étant progressivement fondu par l'arc en contribuant ainsi à la formation d'un cordon de soudure 36.

### EXEMPLES

Dans le cadre des essais consignés ci-après, l'installation utilisée est telle que décrite en Figures 1 et 2.

Les dépôts ayant servi aux analyses de métal hors dilution ont été faits en utilisant un gaz de protection de type ATAL 5A (composition : Argon + 18 vol.% de CO₂).

Les fils fourrés testés sont selon le cas, des fils de technologie "feuillard" ou des fils tubulaires soudés, notamment des fils de technologie dite "Oerlikon".

Les analyses de métal fondu présentées ci-après sont toutes réalisées sur des dépôts hors dilution.

Un tel dépôt consiste en la réalisation d'un empilement d'au moins sept couches successives obtenues par fusion du fil et son dépôt sur un acier non allié de type S 235 JRG2 selon la norme EN 10025.

### Fils "feuillard"

Plusieurs fils type feuillard de 1.2 mm de diamètre ont été produits avec différents ratio de rutile/zircone pour déterminer son impact sur le transfert de titane et sur la soudabilité du produit.

Pour ce faire, de façon connue en soi, une feuille d'acier ou feuillard est mis en forme de U et rempli à l'aide des éléments de remplissage formant le flux. Le feuillard est ensuite refermé par resserrement de ses bords longitudinaux et obtention d'une forme en O qui est alors éventuellement tréfilée et/ou laminée jusqu'au diamètre désiré, à savoir ici 1.2 mm.

Les rapports massiques suivants de 75/25, 50/50, 25/75 et 0/100 en rutile/zircone ont été testés. En dehors de ce rapport, la composition des flux utilisés pour ces fils fourrés est restée égale.

La composition massique du flux de remplissage contenu dans les différents fils est donnée dans le Tableau 8 ci-après ; il est à noter que la balance de composition du flux pour arriver à 100% est réalisée avec de la poudre de fer.

**Tableau 8**

| **Elements (%)** | **C** | **Si** | **Mn** | **Mo** | **Ni** | **Cr** | **B** | **Mg** | **Na** | **K** | **Li** | **Ti** | **Al** | **TiO₂** | **SiO₂** | **ZrO₂** |
|---|---|---|---|---|---|---|---|---|---|---|---|---|---|---|---|---|
| **Fil fourré n°1** | 0.073 | 7.03 | 11.79 | - | - | - | 0.0985 | 1.59 | 0.010 | 1.52 | - | 21.61 | 1.76 | 36.22 | 3.50 | 0.00 |
| **Fil fourré n°2** | 0.162 | 3.58 | 11.19 | - | - | - | 0.0593 | 3.80 | 0.362 | 0.73 | - | 6.93 | 0.70 | 11.75 | 3.95 | 35.25 |
| **Fil fourré n°3** | 0.162 | 3.58 | 11.19 | - | - | - | 0.0593 | 3.80 | 0.362 | 0.73 | - | 13.87 | 0.70 | 23.50 | 3.95 | 23.50 |
| **Fil fourre n°4** | 0.162 | 3.58 | 11.19 | - | - | | 0.0593 | 3.80 | 0.362 | 0.73 | - | 20.80 | 0.70 | 35.25 | 3.95 | 11.75 |
| **Fil fourré n°5** | 0.068 | 2.75 | 11.18 | 2.04 | 13.74 | 0.74 | 0.0593 | 3.80 | 0.362 | 0.73 | - | 13.87 | 0.70 | 23.50 | 3.95 | 23.50 |
| **Fil fourré n°6** | 0.068 | 2.75 | 11.18 | 2.04 | 13.74 | 0.74 | - | 3.80 | 0.362 | 0.73 | - | 13.87 | 0.70 | 23.50 | 3.95 | 23.50 |
| **Fil fourré n°7** | 0.058 | 2.47 | 11.18 | 2.04 | 13.74 | 0.74 | 0.0495 | 3.80 | 0.362 | 0.73 | - | 13.87 | 0.69 | 23.50 | 3.95 | 23.50 |
| **Fil fourré n°8** | 0.058 | 2.47 | 11.18 | 2.04 | 13.74 | - | 0.0495 | 3.80 | 0.362 | 0.73 | - - | 13.87 | 0.69 | 23.50 | 3.95 | 23.50 |
| **Fil fourré n°9** | 0.049 | 2.47 | 8.98 | 2.04 | 15.90 | - | 0.0495 | 3.80 | 0.362 | 0.73 | - | 13.87 | 0.69 | 23.50 | 3.95 | 23.50 |
| **Fil fourré n°10** | 0.047 | 2.47 | 9.08 | 2.04 | 11.34 | - | 0.0495 | 3.80 | 0.362 | 0.73 | - | 13.87 | 0.69 | 23.50 | 3.95 | 23.50 |
| **Fil fourré n°11** | 0.047 | 2.46 | 10.88 | 0.81 | 11.34 | - | 0.0495 | 3.80 | 0.362 | 0.73 | - | 13.87 | 0.69 | 23.50 | 3.95 | 23.50 |
| **Fil fourré n°12** | 0.047 | 2.46 | 12.52 | 0.81 | 11.34 | - | 0.0495 | 3.80 | 0.362 | 0.73 | - | 13.87 | 0.69 | 23.50 | 3.95 | 23.50 |
| **Fil fourré n°13** | 0.049 | 2.47 | 8.98 | 2.04 | 15.90 | - | 0.0495 | 3.80 | 0.362 | 0.73 | - | 13.87 | 0.69 | 23.50 | 3.95 | 23.50 |
| **Fil fourré n°14** | 0.109 | 3.02 | 11.18 | 2.27 | 15.09 | 0.74 | - | 3.80 | 0.362 | 0.73 | - | 13.87 | 0.70 | 23.50 | 3.95 | 23.50 |
| **Fil fourré n°15** | 0.047 | 3.02 | 11.98 | 2.04 | 11.34 | - | 0.0495 | 3.80 | 0.362 | 0.73 | - | 13.87 | 0.70 | 23.50 | 3.95 | 23.50 |
| **Fil fourré n°16** | 0.109 | 3.02 | 11.18 | 2.27 | 15.09 | 0.74 | - | 3.80 | 0.362 | 0.73 | - | 13.87 | 0.70 | 23.50 | 3.95 | 23.50 |
| **Fil fourré n°17** | 0.042 | 4.07 | 10.66 | 1.81 | 10.09 | - | 0.0440 | 1.78 | 0.323 | 1.85 | - | 12.81 | 0.62 | 21.71 | 6.48 | 21.71 |
| **Fil fourré n°18** | 0.043 | 3.86 | 10.96 | 1.86 | 10.38 | - | 0.0452 | 1.83 | 0.474 | 1.24 | 0.0297 | 13.17 | 0.64 | 22.33 | 5.90 | 22.33 |
| **Fil fourré n°19** | 0.18 | 3.86 | 15.06 | 1.86 | 11.89 | - | 0.072 | 1.83 | 0.474 | 1.24 | 0.0297 | 13.17 | 0.64 | 22.33 | 5.90 | 22.33 |
| **Fil fourré n°20** | 0.047 | 2.47 | 11.97 | 2.04 | 11.34 | - | 0.0495 | 3.80 | 0.362 | 0.73 | - | 13.87 | 0.69 | 23.50 | 3.95 | 23.50 |
| **Composition min. du fourrage** | 0.03 | 2.0 | 5.60 | 0.59 | 7.50 | | 0.001 | 1.5 | 0.001 | 0.70 | 0.023 | 6.0 | 0.5 | 11.0 | 3.0 | 11.5 |
| **Composition max. du fourrage** | 0.20 | 4.9 | 19.70 | 3.20 | 19.70 | | 0.150 | 4.0 | 0.52 | 2.0 | 0.040 | 14.0 | 0.8 | 35.5 | 6.5 | 35.5 |

Par ailleurs, la composition massique des différents fils testés (fils fourrés 1 à 4) est donnée dans le Tableau 9. Le taux de remplissage des fils fourrés varie de 14 à 17% environ.

**Tableau 9**

| **Elements** | **Taux de remplissage (%)** | **C** | **Si** | **Mo** | **Mo** | **Ni** | **Cr** | **B** | **Mg** | **Na** | **K** | **Li** | **Ti** | **Al** | **TiO₂** | **SiO₂** | **ZrO₂** |
|---|---|---|---|---|---|---|---|---|---|---|---|---|---|---|---|---|---|
| **Fil** | 15.3 | 0.055 | 1.08 | 2.18 | - | 0.02 | 0.02 | 0.0150 | 0.24 | 0.001 | 0.23 | - | 3.30 | 0.27 | 5.53 | 0.53 | 0.00 |
| **Fil fourré n°2** | 16.3 | 0.070 | 0.59 | 2.20 | - | 0.02 | 0.02 | 0.0096 | 0.62 | 0.059 | 0.12 | - | 1.13 | 0.12 | 1.91 | 0.64 | 5.73 |
| **Fil fourré n°3** | 16.2 | 0.070 | 0.58 | 2.18 | - | 0.02 | 0.02 | 0.0096 | 0.61 | 0.058 | 0.12 | - | 2.24 | 0.12 | 3.79 | 0.64 | 3.79 |
| **Fil fourré n°4** | 15.3 | 0.070 | 0.60 | 2.23 | - | 0.02 | 0.02 | 0.0098 | 0.63 | 0.060 | 0.12 | - | 3.18 | 0.12 | 5.83 | 0.65 | 1.94 |
| **Fil fourré n°5** | 16.3 | 0.055 | 0.45 | 2.20 | 0.33 | 2.26 | 0.15 | 0.0097 | 0.62 | 0.059 | 0.12 | - | 2.27 | 0.12 | 3.84 | 0.64 | 3.84 |
| **Fil fourré n°6** | 16.6 | 0.055 | 0.46 | 2.23 | 0.34 | 2.29 | 0.15 | - | 0.63 | 0.060 | 0.12 | - | 2.30 | 0.12 | 3.89 | 0.65 | 3.89 |
| **Fil fourré n°7** | 16.5 | 0.053 | 0.41 | 2.21 | 0.34 | 2.27 | 0.15 | 0.0081 | 0.62 | 0.060 | 0.12 | - | 2.28 | 0.12 | 3.86 | 0.65 | 3.86 |
| **Fil fourré n°8** | 16.4 | 0.053 | 0.41 | 2.20 | 0.33 | 2.26 | 0.02 | 0.0081 | 0.62 | 0.059 | 0.12 | - | 2.27 | 0.12 | 3.84 | 0.65 | 3.84 |
| **Fil fourré n°9** | 16.5 | 0.052 | 0.41 | 1.86 | 0.34 | 2.64 | 0.02 | 0.0081 | 0.63 | 0.060 | 0.12 | - | 2.29 | 0.12 | 3.87 | 0.65 | 3.87 |
| **Fil fourré n°10** | 16.6 | 0.051 | 0.41 | 1.88 | 0.34 | 1.90 | 0.02 | 0.0082 | 0.63 | 0.060 | 0.12 | - | 2.30 | 0.12 | 3.89 | 0.65 | 3.89 |
| **Fil fourré n°11** | 16.6 | 0.051 | 0.41 | 2.18 | 0.13 | 1.90 | 0.02 | 0.0082 | 0.63 | 0.060 | 0.12 | - | 2.30 | 0.12 | 3.90 | 0.65 | 3.90 |
| **Fil fourré n°12** | 16.3 | 0.051 | 0.41 | 2.42 | 0.13 | 1.87 | 0.02 | 0.0081 | 0.62 | 0.059 | 0.12 | - | 2.27 | 0.12 | 3.84 | 0.64 | 3.84 |
| **Fil fourré n°13** | 16.4 | 0.052 | 0.41 | 1.85 | 0.33 | 2.62 | 0.02 | 0.0081 | 0.62 | 0.059 | 0.12 | - | 2.28 | 0.12 | 3.85 | 0.65 | 3.85 |
| **Fil fourré n°14** | 16.0 | 0.061 | 0.49 | 2.17 | 0.36 | 2.43 | 0.14 | - | 0.61 | 0.058 | 0.12 | - | 2.22 | 0.12 | 3.76 | 0.63 | 3.76 |
| **Fil fourré n°15** | 14.0 | 0.051 | 0.43 | 2.06 | 0.29 | 1.61 | 0.02 | 0.0069 | 0.53 | 0.051 | 0.10 | - | 1.95 | 0.10 | 3.29 | 0.55 | 3.29 |
| **Fil fourré n°16** | 16.4 | 0.061 | 0.50 | 2.21 | 0.37 | 2.49 | 0.15 | - | 0.62 | 0.060 | 0.12 | - | 2.28 | 0.12 | 3.86 | 0.65 | 3.86 |
| **Fil fourré n°17** | 15.3 | 0.050 | 0.63 | 2.01 | 0.28 | 1.56 | 0.02 | 0.0067 | 0.27 | 0.049 | 0.28 | - | 1.96 | 0.09 | 3.32 | 0.99 | 3.32 |
| **Fil fourré n°18** | 15.3 | 0.051 | 0.59 | 2.06 | 0.29 | 1.61 | 0.02 | 0.0069 | 0.28 | 0.073 | 0.19 | 0.0046 | 2.02 | 0.10 | 3.42 | 0.90 | 3.42 |
| **Fil fourré n°19** | 15.4 | 0.072 | 0.59 | 2.67 | 0.29 | 1.82 | 0.02 | 0.011 | 0.28 | 0.073 | 0.19 | 0.0046 | 2.03 | 0.10 | 3.44 | 0.91 | 3.44 |
| **Fil fourré n°20** | 16.4 | 0.051 | 0.41 | 2.34 | 0.33 | 1.87 | 0.02 | 0.0081 | 0.62 | 0.059 | 0.12 | - | 2.27 | 0.11 | 3.84 | 0.65 | 3.84 |
| **Composition min. du feuillard** | - | 0.01 | 0.001 | 0.001 | 0.001 | 0.001 | 0.001 | 0.0001 | - | - | - | - | - | - | - | - | - |
| **Composition max. du feuillard** | - | 0.10 | 0.5 | 1.5 | | 1.0 | 0.10 | 0.0020 | - | - | - | - | - | - | - | - | - |
| **Composition typique du feuillard** | - | 0.047 | 0.005 | 0.47 | 0.007 | 0.033 | 0.042 | 0.0001 | - | - | - | - | 0.001 | 0.006 | - | - | - |
| **Composition min. du fil** | - | 0.030 | 0.30 | 1.80 | 0.001 | 0.01 | 0.01 | 0.0001 | 0.20 | 0.045 | 0.08 | 0.003 | 1.10 | 0.05 | 1.90 | 0.50 | 1.50 |
| **Composition max. du fil** | - | 0.085 | 0.70 | 2.70 | 0.40 | 3.00 | 0.20 | 0.0120 | 0.70 | 0.10 | 0.35 | 0.006 | 3.5 | 0.15 | 6.00 | 1.10 | 5.80 |

Les paramètres de soudage utilisés ont été les suivants :
- vitesse fil = 11.5m/min
- tension de soudage comprise entre 28 et 29V
- intensité de soudage comprise entre 265 et 290A

Les résultats sont consignés dans le Tableau 1 ci-après, où sont données les compositions hors dilution du métal déposé (i.e. joint de soudure) obtenu avec les fils testés.

**Tableau 1 : composition du métal déposé**

| | Fil fourré 1 | Fil fourré 2 | Fil fourré 3 | Fil fourré 4 |
|---|---|---|---|---|
| Eléments | 0/100 | 75/25 | 50/50 | 25/75 |
| C | 0.042 | 0.072 | 0.068 | 0.068 |
| Si | 0.88 | 0.48 | 0.52 | 0.62 |
| Mn | 1.47 | 1.44 | 1.49 | 1.52 |
| P | 0.010 | 0.010 | 0.010 | 0.010 |
| S | 0.005 | 0.007 | 0.008 | 0.009 |
| Zr | 0.002 | 0.003 | 0.006 | 0.008 |
| Ti | 0.080 | 0.044 | 0.035 | 0.022 |

| | | | | |
|---|---|---|---|---|
| (valeurs exprimées en % en masse) | | | | |

Comme on le voit, le rapport 0/100 (fil fourré n°1) conduit à des fils fourrés ne donnant pas satisfaction puisque la teneur en Ti obtenue dans le métal déposé est de l'ordre de 800 ppm (i.e. 0.08%), donc bien trop élevée pour garantir une bonne résilience. En effet, comme déjà mentionné, dans le cas des aciers HLE, pour obtenir de bonnes résiliences et un niveau de traction suffisant, la teneur en titane doit être préférentiellement inférieure à 300 ppm dans le métal fondu.

Par ailleurs, les rapports fils de 25/75, 50/50 et 75/25 respectivement (fils fourrés n°4, 3 et 2, resp.) ont montré un comportement opératoire qui a été jugé moyen mais suffisamment bon pour être utilisable notamment pour le fil fourré n°4 du fait d'une teneur en titane de 220 ppm, mais aussi pour les n°2 et 3, malgré des teneurs en titane trop élevées, à savoir de 350 et 440 ppm respectivement, lors d'opérations de soudage en position, et plus particulièrement en verticale montante (vitesse fil = 8.5 m/min, tension = 24-25V et intensité = 220-230A).

En d'autres termes, on constate bien une diminution de la teneur en titane (Ti) de 800 ppm à 220 ppm en fonction de la proportion de zircone et de rutile dans le flux. En fait, moins il y a de rutile présent dans le flux, plus la teneur en titane est faible en zone fondue, donc les résiliences et la traction améliorées.

Il est à noter également que ces fils ne présentent pas une augmentation du transfert en zirconium dans le métal fondu, alors que les autres éléments tels que le carbone, le silicium et le manganèse se retrouvent présents à des teneurs représentatives de ce qui est nécessaire pour obtenir un acier HLE, hors éléments d'alliage, tels que le nickel, le molybdène, le bore et/ou le chrome. La substitution de rutile par de la zircone n'influence donc pas négativement les autres éléments du joint de soudure.

Le développement des fils a donc été poursuivi sur une base rutile/zirconium 50/50 pour permettre d'abaisser la teneur en Ti en zone fondue tout en gardant des qualités opératoires et une productivité comparable à un fil rutile conventionnel. En effet, il nous est apparu que le fil à 50/50 présente le meilleur compromis entre faible niveau de titane et performances opératoires.

En fait, le faible niveau de titane obtenu avec le fil 25/75 est intéressant mais ses performances opératoires ne permettront pas d'en faire un fil facile d'emploi au plan industriel.

Quant aux performances opératoires obtenues avec le fil à 75/25, étant données qu'elles sont similaires à celles obtenues avec le fil 50/50, c'est l'abaissement le plus important du niveau de titane dans le métal fondu qui a été privilégié, donc le choix pour la suite des essais s'est porté sur le fil 50/50.

Partant de là, d'autres fils fourrés de 1.2 mm de diamètre ont été formulés. La composition massique du flux contenu dans les différents fils testés est donnée dans le Tableau 8 ci-après (balance de composition du flux pour arriver à 100% réalisée avec de la poudre de fer) et la composition massique des différents fils fourrés testés est donnée dans le Tableau 9.

Des ajustements sur la teneur en manganèse de 1 à 1.80%, en molybdène de 0.10 à 0.50%, en silicium de 0.15 à 0.50%, en nickel de 1.80 à 2.80%, en chrome de 0.02 à 0.20% et en bore de 0.0002% à 0.0040% ont été réalisés afin d'observer leur influence sur les propriétés mécaniques.

Ces fils ont été testés comme précédemment.

Les fils feuillards testés qui sont tous basés sur une composition de flux comprenant autant de rutile que de zircone en masse (50/50), ont permis de diminuer la quantité de titane contenu dans le métal fondu de façon relativement stable et reproductible, comme en témoignent les résultats obtenus pour les nouveaux fils fourrés fils n°5 à 12 du Tableau 2, puisqu'ils ont conduit à des joints de soudure contenant des teneurs en titane comprises entre 170 et 310 ppm environ, donc toujours inférieures à 350 ppm et compatibles avec le soudage des aciers HLE.

Plus précisément, le Tableau 2 présente les compositions du métal déposé hors dilution pour les différents fils fourrés alliés testés en soudage d'un acier HLE de limite élastique 690 MPa.

La composition du métal fondu hors dilution ainsi obtenu montre des variations sur les éléments suivants : le Si varie entre 0.21 et 0.35%, le Mn varie entre 1.10 et 1.66%, le Cr varie entre 0.033 et 0.15%, le Mo varie entre 0.13 et 0.39%, le Ni varie entre 1.89 et 2.71%, le Ti varie entre 0.024 et 0.031%, et le B varie entre 0.0002 et 0.0031%. Ces variations résultent de modifications volontaires de la composition du flux du fil fourré fil afin d'en évaluer l'impact sur les propriétés mécaniques du métal déposé hors dilution.

**Tableau 2**

| | Fil fourré 5 | Fil fourré 6 | Fil fourré 7 | Fil fourré 8 | Fil fourré 9 | Fil fourré 10 | Fil fourré 11 | Fil fourré 12 |
|---|---|---|---|---|---|---|---|---|
| C | 0.060 | 0.060 | 0.050 | 0.052 | 0,059 | 0,059 | 0,064 | 0,057 |
| Si | 0.35 | 0.34 | 0.32 | 0.32 | 0,23 | 0,22 | 0,24 | 0,21 |
| Mn | 1.42 | 1.38 | 1.40 | 1.42 | 1,10 | 1,20 | 1,52 | 1,66 |
| P | 0.011 | 0.011 | 0.010 | 0.010 | 0,010 | 0,010 | 0,010 | 0,010 |
| S | 0.009 | 0.01 | 0.008 | 0.008 | 0,007 | 0,009 | 0,009 | 0,008 |
| Cr | 0.15 | 0.14 | 0.15 | 0.035 | 0,033 | 0,033 | 0,036 | 0,037 |
| Mo | 0.38 | 0.39 | 0.37 | 0.39 | 0,35 | 0,35 | 0,14 | 0,13 |
| Ni | 2.34 | 2.41 | 2.33 | 2.40 | 2,71 | 1,95 | 2,02 | 1,89 |
| Zr | 0.006 | 0.006 | 0.005 | 0.005 | 0.005 | 0.005 | 0.005 | 0.005 |
| Ti | 0.024 | 0.025 | 0.026 | 0.027 | 0,030 | 0,024 | 0,031 | 0,030 |
| B | 0.0031 | 0.0002 | 0.0029 | 0.0025 | 0,0023 | 0,0022 | 0,0030 | 0,0026 |
| O | 0.0526 | 0.0553 | 0.0520 | 0.0541 | 0,0590 | 0,0484 | 0,049 | 0,053 |
| N | 0.0041 | 0.0038 | 0.0038 | 0.0039 | 0,0030 | 0,0056 | 0,0054 | 0,0051 |

Ces fils fourrés 5 à 12 ont permis de tester différentes balances d'éléments d'alliage sur une base de fil fourré à 50/50 en zircone/rutile afin de caractériser leur impact sur les propriétés mécaniques du métal déposé obtenu avec de telles compositions chimiques.

A ce titre, on a constaté que les propriétés mécaniques des dépôts hors dilution étaient impactées par ces différentes balances. En effet, seuls les fils fourrés n°8, 9 et 11 présentent un niveau de résilience supérieur à 69J à -40°C et/ou à 47J à -60°C avec une limite élastique supérieure à 690 MPa. Les fils fourrés n°5 à 7 présentent les limites élastiques supérieures à 690 MPa mais un niveau de résilience uniquement supérieur à 47J à -40°C. Les fils fourrés n°10 et 12 présentent quant à eux un niveau de résilience supérieur à 69J à -40°C et/ou à 47J à -60°C mais avec une limite élastique seulement supérieure à 630 MPa.

Dans tous les cas, on peut noter la relativement faible variation de la teneur en titane dans le métal déposé et ce, malgré les variations importantes de composition chimique des fils fourrés 5 à 12.

### Fils tubulaires

Les fils tubulaires utilisés dans les essais ci-après peuvent être fabriqués selon deux procédés A et B différents, à savoir :
- Procédé A : Un feuillard est mis en forme de U puis rempli à l'aide d'un flux de remplissage sec, comme pour la technologie "feuillard". Toutefois, dans ce cas, le fil est ensuite refermé (forme en O) puis soudé hermétiquement afin d'en faire un fil fourré totalement étanche.
- Procédé B : Le flux sec est d'abord aggloméré à l'aide d'un silicate afin de le granuler, puis séché et tamisé, pour enfin servir à remplir un tube en acier par vibration. Le tube est fabriqué, avant son remplissage, au moyen d'une feuille métallique d'acier formée en U puis en O, puis soudée le long de ses bords longitudinaux. Le remplissage par le flux a donc lieu après soudage seulement. On parle dans ce cas de fil de technologie "tubulaire".

Ces fils tubulaires à bords soudés sont techniquement plus compliqués à fabriquer qu'un fil de type "feuillard" mais présentent un intérêt technique important puisque leur fermeture hermétique par soudage les rend insensibles à la vapeur d'eau. En effet, le fait de réaliser une fermeture du tube par soudage évite les phénomènes de reprise en humidité souvent constatés sur les fils de type "feuillard".

De plus, la fermeture hermétique permet un cuivrage du fil et donc permet d'améliorer son comportement lors de sa fusion par l'arc électrique.

Ces deux types de fils tubulaires (selon les procédés A et B) ont été testés dans le cadre de la présente invention.

### Fil tubulaire rempli avec un flux sec (Procédé A)

Plusieurs essais sur des fils tubulaires à flux sec ont été menés. La composition massique du flux contenu dans ces différents fils testés (fils n°13 à 15) est donnée dans le

Tableau 8 ci-après (balance de composition du flux pour arriver à 100% est réalisée avec de la poudre de fer) et la composition massique des différents fils fourrés est donnée dans le Tableau 9.

L'installation de soudage et les matériels utilisés sont les mêmes que précédemment.

Les paramètres de soudage utilisés sont une vitesse de fil de 8.5m/min, une tension de soudage comprise entre 24 et 25V, et une intensité de soudage comprise entre 220 et 230A.

Les résultats obtenus sont consignés dans le Tableau 3

**Tableau 3**

| | Fil fourré 13 | Fil fourré 14 | Fil fourré 15 |
|---|---|---|---|
| C | 0,058 | 0.050 | 0,043 |
| Si | 0,29 | 0.41 | 0,37 |
| Mn | 1,36 | 1.22 | 1,59 |
| P | 0,007 | 0.008 | 0,008 |
| S | 0,005 | 0.006 | 0,006 |
| Cr | 0,031 | 0.14 | 0,031 |
| Mo | 0,39 | 0.41 | 0,34 |
| Ni | 2,91 | 2.54 | 1,82 |
| Zr | 0.005 | 0.004 | 0.004 |
| Ti | 0,028 | 0.017 | 0,026 |
| B | 0,0028 | 0.0002 | 0,0030 |

Ces résultats montrent que le taux de titane (Ti) dans le métal fondu est resté relativement stable en dessous de 300 ppm pour les fils fourrés n°13 à 15 et ce, malgré des variations de composition chimique du flux en plusieurs éléments, à savoir carbone, silicium, manganèse, nickel, chrome et bore. Ainsi nous obtenons des valeurs de teneur en titane de 280, 170 et 260 ppm en masse respectivement pour les fils fourrés n°13, 14 et 15.

Ces éléments peuvent donc varier sans engendrer d'impact négatif sur la teneur en titane du métal déposé, c'est-à-dire du joint soudé. Ceci est avantageux car leurs proportions respectives peuvent être choisies avec plus d'amplitude de manière à satisfaire au mieux au type d'acier HLE à souder.

Par ailleurs, on a consigné dans le Tableau 4, une comparaison des analyses hors dilution obtenues avec un fil feuillard (n°16) et un fil tubulaire à flux sec (n°16B) qui sont élaborés à partir d'un mélange rutile/zircone identique. Les flux constituant les fourrages des fils fourrés n°16 et 16B sont totalement identiques tant du point de vue de leur composition chimique que de la nature des poudres qui les constituent.

**Tableau 4**

| | Fil fouré 16 | Fil fourré 16B |
|---|---|---|
| Type de fil | Feuillard | Tubulaire à flux sec |
| C | 0.069 | 0.050 |
| Si | 0.45 | 0.41 |
| Mn | 1.50 | 1.22 |
| P | 0.010 | 0.008 |
| S | 0.009 | 0.006 |
| Cr | 0.15 | 0.14 |
| Mo | 0.44 | 0.41 |
| Ni | 2.73 | 2.54 |
| Zr | 0.006 | 0.004 |
| Ti | 0.027 | 0.017 |
| B | 0.0001 | 0.0002 |
| O | 0.0558 | 0.0508 |
| N | 0.0040 | 0.0071 |

Comme on le voit, lorsque l'on passe du fil fourré n° 16, fabriqué en technologie de type feuillard, au fil fourré n° 16B produit en fil tubulaire à flux sec composé du même flux (compositions des flux données dans le Tableau 8), la teneur en Ti reste basse, c'est-à-dire à moins de 300 ppm en masse, et peut même descendre en dessous de 200 ppm. Cette baisse supplémentaire montre l'influence positive du procédé de fabrication sur le niveau de titane obtenu dans le métal fondu. Cette influence est également visible sur d'autres éléments tels que le carbone avec une baisse de 0.019%, le manganèse avec une baisse de 0.28% et le nickel avec une baisse de 0.19%. On pourra préférer dès lors utiliser un fil fourré de type tubulaire à flux sec car il permet de garantir une teneur en titane très inférieure à celle des fils type feuillard.

Fil tubulaire aggloméré à l'aide d'un silicate (Procédé B)

On a testé un fil (fil n°17) fabriqué selon le procédé Oerlikon à partir de la même base de formule que le flux du fil fourré 16 de base mixte TiO₂/ZrO₂ à 50/50, lequel flux a été aggloméré à l'aide d'un silicate de potassium afin de le granuler, puis séché et tamisé.

La composition massique du flux est donnée dans le Tableau 8 ci-après (balance de composition avec poudre de fer) et la composition massique du fil fourré est donnée dans le Tableau 9.

Les paramètres de soudage utilisés sont une vitesse de fil de 11.5m/min, une tension de soudage comprise entre 28 et 29V, et une intensité de soudage comprise entre 265 et 290A.

Les résultats obtenus ont été consignés dans le Tableau 5 qui donne l'analyse du métal déposé hors dilution.

**Tableau 5**

| | Fil fourré 17 |
|---|---|
| Type de fil | Tubulaire à flux aggloméré |
| C | 0,052 |
| Si | 0.45 |
| Mn | 2.17 |
| P | 0.008 |
| S | 0.009 |
| Cr | 0.029 |
| Mo | 0.42 |
| Ni | 2.35 |
| Zr | 0.006 |
| Ti | 0.029 |
| B | 0.0042 |

On y voit que les joints de soudure réalisés avec le fil fourré n°17 présentent également des valeurs de titane faibles, c'est-à-dire inférieures à 300 ppm.

Cependant, on constate aussi, après inspection des cordons de soudage, des inclusions de flux partiellement fondu au sein de chaque cordon, ce qui rend ces fils inacceptables pour la réalisation d'assemblages soudés.

Or, un fil à flux sec (Fil n°16B par exemple) contenant ZrO₂ en forte proportion, c'est-à-dire plus de 25 % en masse dans le fourrage, ne présente pas d'inclusions de ce type, ni un fil tubulaire à flux aggloméré classique sans zircone.

La zircone utilisée et l'étape d'agglomération ressortent donc comme deux facteurs clés à l'apparition de ces inclusions néfastes.

De là, afin de faciliter la fusion du flux, l'étape d'agglomération a été modifiée en substituant le silicate de potassium par un silicate à cations mixtes, à savoir un silicate de lithium, potassium et sodium, sachant que l'on peut utiliser un ou plusieurs silicate de Li⁺, de Na⁺et/ou de K⁺.

Le fil fourré n°18 ainsi obtenu, a été testé dans les mêmes conditions que précédemment.

La composition massique du flux contenu dans le fil n°18 est donnée dans le Tableau 8 ci-après (balance de composition du flux avec poudre de fer) et la composition massique du fil fourré n°18 est donnée dans le Tableau 9.

Ces essais supplémentaires réalisés avec le fil fourré n°18 ont montré que l'utilisation d'un tel silicate de lithium, potassium et sodium permet d'éviter l'apparition de ces défauts inacceptables, c'est-à-dire les inclusions, tout en conservant une analyse hors dilution du métal fondu avec un titane bas, c'est-à-dire de moins de 300 ppm.

Il est donc recommandé d'utiliser des silicates de lithium, potassium et/ou sodium lorsque le fil fourré est de type tubulaire aggloméré.

D'autres essais, on été opérés avec un fil fourré n°19 présentant un ajustement en Mn, Ni et B par rapport au fil fourré n°18. Comme précédemment, les compositions massiques du flux et du fil fourré n°19 sont données dans les Tableaux 8 et 9.

Les analyses des dépôts hors dilution des fils fourrés n°18 et 19 sont présentées au Tableau 6.

**Tableau 6**

| | Fil fourré 18 | Fil fourré 19 |
|---|---|---|
| Type de fil | Tubulaire à flux aggloméré et fusion optimisée | Tubulaire à flux aggloméré et fusion optimisée |
| C | 0,037 | 0.050 |
| Si | 0,29 | 0.32 |
| Mn | 1,16 | 1.65 |
| P | 0,008 | 0.012 |
| S | 0,008 | 0.007 |
| Cr | 0,033 | 0.036 |
| Mo | 0,33 | 0.30 |
| Ni | 1,76 | 1.93 |
| Zr | 0.005 | 0.004 |
| Ti | 0,020 | 0.022 |
| B | 0,0019 | 0.0032 |

Ce tableau 6 met en évidence le fait qu'un ajustement optimisé du fil portant sur le carbone et le manganèse n'influence pas la quantité de titane transférée dans le métal fondu. De même que pour un fil fourré feuillard, cela permet un ajustement optimal de la composition du métal déposé en vue d'atteindre les propriétés mécaniques visées (i.e. des résiliences supérieurs à 69J à -40°C et 47J à -60°C, et une limite élastique supérieure à 690 MPa) tout en garantissant un niveau bas de Ti dans le métal déposé.

Le Tableau 7 ci-dessous présente l'analyse et les propriétés mécaniques obtenues sur métal déposé hors dilution à l'aide de plusieurs fils de type feuillard à base rutile/zircone (fils fourrés n°8, 9 et 20) mis en oeuvre pour le soudage des aciers HLE de type 690 MPa, et à titre de comparaison, pour un fil fourré n° 21 de type tubulaire à flux aggloméré à 100% rutile, c'est-à-dire sans zircone, disponible dans le commerce sous la référence Fluxofil 29HD.

Les fils 8, 9 et 20 se différencient par l'analyse du métal déposé car les variations des éléments C, Si, Mn et Ni ont une influencent sur les propriétés mécaniques ; les Fils 8 et 9 étant ceux du Tableau 2.

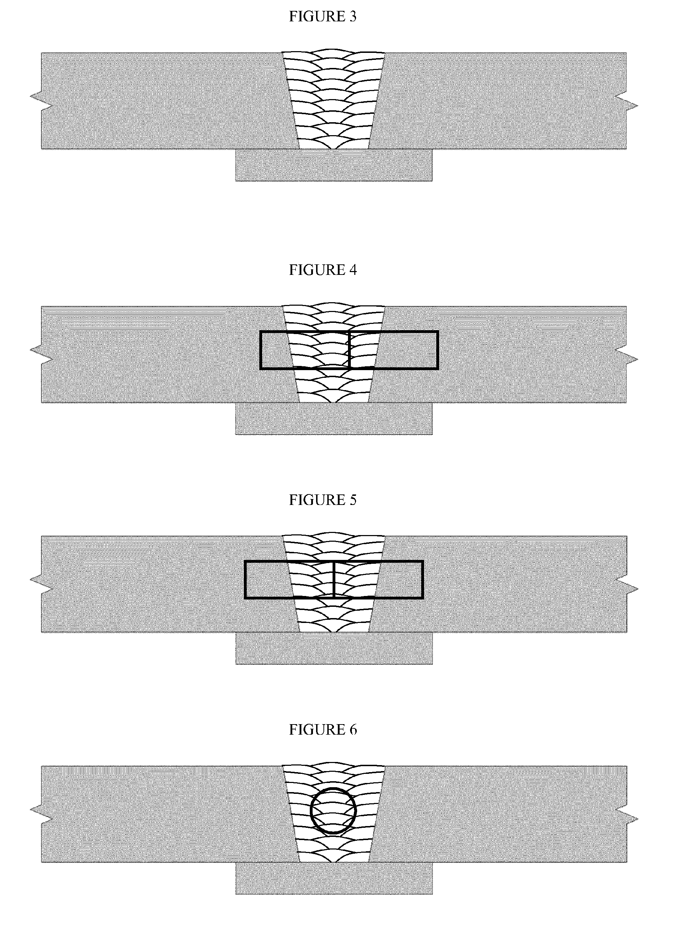

Les paramètres et conditions de soudage ont été une intensité de 250 A, une tension de 27.7 V, une énergie de soudage de 15 à 20 kJ/cm, une température entre-passe de 130 à 150°C avec préchauffage à 150°C, et un dépôt réalisé en 3 passes par couche comme schématisé en Figure 3.

L'acier support en forme de latte de 20 mm d'épaisseur, est de type A42 chanfreiné à 10°. La latte support est préalablement beurrée, c'est-à-dire recouverte, avec du métal provenant du fil testé.

Les résiliences sont prélevées à mi-épaisseur dans la zone recuite correspondante à l'axe situé entre deux passes et la zone brute correspondante à l'axe des passes, comme illustré en Figure 4 (zone recuite) et 5 (zone brute).

Par ailleurs, les tractions sont prélevées à mi-épaisseur dans l'axe du moule comme illustré en Figure 6.

**Tableau 7**

| | Fil Fourre 8 | Fil fourré 9 | Fil fourré 20 | Fil Fourré 21 |
|---|---|---|---|---|
| Type de fil | Feuillard | Feuillard | Feuillard | Tubulaire à flux aggloméré |
| C | 0.052 | 0,059 | 0.075 | 0.071 |
| Si | 0.32 | 0,23 | 0.25 | 0.46 |
| Mn | 1.42 | 1,10 | 1.53 | 1.68 |
| P | 0.010 | 0,010 | 0.010 | 0.010 |
| S | 0.008 | 0,007 | 0.008 | 0.008 |
| Cr | 0.035 | 0,033 | 0.035 | 0.033 |
| Mo | 0.39 | 0,35 | 0.37 | 0.35 |
| Ni | 2.40 | 2,71 | 1.98 | 3.00 |
| Zr | 0.005 | 0.005 | 0.005 | 0.003 |
| Ti | 0.027 | 0,030 | 0.030 | 0.046 |
| B | 0.0025 | 0,0023 | 0.0028 | 0.0038 |
| O | 0.0541 | 0,0590 | 0.0620 | 0.0572 |
| N | 0.004 | 0,003 | 0.003 | 0.006 |

| Kv Moyennes (J) | | | | |
|---|---|---|---|---|
| -20°C en zone recuite | 87-80-81 (83) | 88-84-84 (85) | 88-94-84 (89) | 60-62-58 (60) |
| -20°C en zone brute | 73-71-79 (74) | 70-72-72 (71) | 78-77-73 (76) | - |
| -40°C en zone recuite | 63-64-69 (65) | 74-72-66 (71) | 78-82-80 (80) | 51-52-57 (53) |
| -40°C en zone brute | 59-52-63 (58) | 64-59-59 (61) | 67-68-70 (68) | - |
| -60°C en zone recuite | 44-54-54 (51) | 60-53-48 (54) | 69-68-61 (66) | - |
| -60°C en zone brute | 46-57-49 (51) | 38-38-41 (39) | 50-56-53 (53) | |

| Traction | | | | |
|---|---|---|---|---|
| Rp (Mpa) | 690 | 705 | 767 | 779 |
| Rm (Mpa) | 738 | 754 | 817 | 822 |
| A% | 16.2 | 16.6 | 18.5 | 17.4 |

Les fils testés permettent d'obtenir de bonnes propriétés mécaniques puisque les limites élastiques mesurées pour les différentes compositions chimiques sont supérieures ou égales à 690 MPa.

Cependant, les meilleures résultats sont obtenus pour le fil fourré n°20 qui présente une teneur en Mn assez élevée, à savoir au moins 1.40 % en masse, et un Ni bas, à savoir moins de 2.2 % en masse. En effet, le fil fourré n°20 permet d'arriver au meilleur compromis, à savoir une tenue à la traction avec une limite élastique de 767 MPa, donc largement supérieure à 690 MPa, et des résiliences à basse température de 89 J à -20°C, de 80 J à -40°C et de 66 J à -60°C.

A titre comparatif, le fil fourré n°21 qui est un fil à 100% rutile, conduit à un niveau de titane (Ti) plus élevé dans le métal déposé, à savoir de 460 ppm, ce qui conduit à l'obtention d'un rapport limite élastique sur résilience moins favorable, sachant que le but visé est d'obtenir le niveau de résilience le plus élevé possible tout, de préférence supérieur ou égal à 690 MPa.

De façon plus générale, il est à noter que les aciers à haute limite élastique sont sensibles au phénomène de fissuration à froid qui est lié à la teneur résiduelle en hydrogène diffusible dans le métal soudé juste après soudage. Lors de la réalisation d'un ouvrage soudé présentant de fortes contraintes mécaniques, il est impératif de limiter cette teneur.

L'intérêt de l'utilisation d'un fil tubulaire par rapport à un fil feuillard est la possibilité de limiter cette teneur grâce au procédé de fabrication du fil.

Ainsi, comme montré par les essais ci-dessus, pour des bases de flux comparables à 50/50 en zircone rutile, un fil feuillard (fil fourré n°20) donnera de 6.8 à 9.0 ml de H₂/100g de métal déposé, alors qu'un fil tubulaire (fil fourré n°19) donnera de 2.9 à 3.9ml de H₂/100g de métal déposé.

Dans le cadre de l'invention, les fils tubulaires sont donc préférés. Toutefois, le fil feuillard pourra tout de même être utilisé dans le cas où un traitement thermique de déshydrogénation ou post-chauffage de la pièce après soudage sera prévu. Ce traitement consistant à chauffer la pièce tout de suite après soudage à une température comprise entre 200 et 350°C pendant un temps variable, en général d'au moins 1h, dépendant de l'épaisseur de la pièce.

Tous ces essais mettent en évidence que, conformément à la présente invention, le fil fourré de soudage à l'arc des aciers à haute limite élastique ou aciers HLE doit comprendre, par rapport à la masse totale du fil fourré, entre 1.5 et 7 % en masse de TiO₂, et plus de 1% et jusqu'à 7 % en masse de ZrO₂, et du fer et éventuellement d'autres éléments, notamment Mn, Ni... dans des proportions contrôlées.

## Revendications

1. Fil fourré de soudage à l'arc comprenant une enveloppe externe en acier contenant des éléments de remplissage, **caractérisé en ce que** lesdits éléments de remplissage comprennent, par rapport à la masse totale du fil fourré :
- de 1.5 à 7 % en masse de TiO₂,
- de plus de 1 % à 7 % en masse de ZrO₂,
- et au moins 75% en masse de fer.

2. Fil fourré selon la revendication précédente, **caractérisé en ce qu'**il contient moins de 6.5% de ZrO₂, de préférence il contient moins de 6% de ZrO₂.

3. Fil fourré selon l'une des revendications précédentes, **caractérisé en ce qu'**il contient plus de 1,2 % en masse de ZrO₂.

4. Fil fourré selon l'une des revendications précédentes, **caractérisé en ce qu'**il contient au moins 1.5% de ZrO₂.

5. Fil fourré selon l'une des revendications précédentes, **caractérisé en ce qu'**il contient de 0,0005 à 0,55% de Li, Na et/ou K.

6. Fil fourré selon l'une des revendications précédentes, **caractérisé en ce qu'**il contient de 0,1 à 1,5% de Si et/ou de 0,01 à 0,5% de Al.

7. Fil fourré selon l'une des revendications précédentes, **caractérisé en ce qu'**il contient de 0,01 à 0,1 % de C.

8. Fil fourré selon l'une des revendications précédentes, **caractérisé en ce qu'**il contient de 1,5 à 3% de Mn.

9. Fil fourré selon l'une des revendications précédentes, **caractérisé en ce qu'**il contient de 0,005 à 3,2% de Ni.

10. Fil fourré selon l'une des revendications précédentes, **caractérisé en ce qu'**il contient de 0,0001 à 0.015% de B.

11. Fil fourré selon l'une des revendications précédentes, **caractérisé en ce qu'**il contient de 0,001 à 0.5% de Mo.

12. Fil fourré selon l'une des revendications précédentes, **caractérisé en ce qu'**il contient de 0,01 à 0.25% de Cr.

13. Fil fourré selon l'une des revendications précédentes, **caractérisé en ce qu'**il contient de 0,10 à 0.80% de Mg.

14. Procédé de soudage à l'arc d'une ou plusieurs pièces en acier présente une haute limite élastique (HLE) supérieure ou égale à 460 MPa, dans lequel on met en oeuvre un fil fourré selon l'une des revendications précédentes, de préférence un acier type HLE présentant une limite élastique supérieure ou égale à 690 MPa

15. Procédé selon la revendication 14, **caractérisé en ce qu'**on met en oeuvre un gaz de protection choisi parmi les mélanges d'argon et de CO₂ et/ou de O₂.

## Revendications modifiées

### Revendications modifiées conformément à la règle 137(2) CBE.

**1.** Fil fourré de soudage à l'arc comprenant une enveloppe externe en acier contenant des éléments de remplissage, lesdits éléments de remplissage comprenant, par rapport à la masse totale du fil fourré de 1.5 à 7 % en masse de TiO₂, du ZrO₂ et au moins 75% en masse de fer, **caractérisé en ce que** lesdits éléments de remplissage comprennent de 1.2 à 7 % en masse de ZrO₂.

**2.** Fil fourré selon la revendication précédente, **caractérisé en ce qu'**il contient moins de 6.5% de ZrO₂, de préférence il contient moins de 6% de ZrO₂.

**3.** Fil fourré selon l'une des revendications précédentes, **caractérisé en ce qu'**il contient plus de 1,2 % en masse de ZrO₂.

**4.** Fil fourré selon l'une des revendications précédentes, **caractérisé en ce qu'**il contient au moins 1.5% de ZrO₂.

**5.** Fil fourré selon l'une des revendications précédentes, **caractérisé en ce qu'**il contient de 0,0005 à 0,55% de Li, Na et/ou K.

**6.** Fil fourré selon l'une des revendications précédentes, **caractérisé en ce qu'**il contient de 0,1 à 1,5% de Si et/ou de 0,01 à 0,5% de Al.

**7.** Fil fourré selon l'une des revendications précédentes, **caractérisé en ce qu'**il contient de 0,01 à 0,1% de C.

**8.** Fil fourré selon l'une des revendications précédentes, **caractérisé en ce qu'**il contient de 1,5 à 3% de Mn.

**9.** Fil fourré selon l'une des revendications précédentes, **caractérisé en ce qu'**il contient de 0,005 à 3,2% de Ni.

**10.** Fil fourré selon l'une des revendications précédentes, **caractérisé en ce qu'**il contient de 0,0001 à 0.015% de B.

**11.** Fil fourré selon l'une des revendications précédentes, **caractérisé en ce qu'**il contient de 0,001 à 0.5% de Mo.

**12.** Fil fourré selon l'une des revendications précédentes, **caractérisé en ce qu'**il contient de 0,01 à 0.25% de Cr.

**13.** Fil fourré selon l'une des revendications précédentes, **caractérisé en ce qu'**il contient de 0,10 à 0.80% de Mg.

**14.** Procédé de soudage à l'arc d'une ou plusieurs pièces en acier présente une haute limite élastique (HLE) supérieure ou égale à 460 MPa, dans lequel on met en oeuvre un fil fourré selon l'une des revendications précédentes, de préférence un acier type HLE présentant une limite élastique supérieure ou égale à 690 MPa

**15.** Procédé selon la revendication 14, **caractérisé en ce qu'**on met en oeuvre un gaz de protection choisi parmi les mélanges d'argon et de CO₂ et/ou de O₂.
